# EUROPEAN PATENT SPECIFICATION

(11) **EP 2 022 767 B1**
(45) Date of publication and mention of the grant of the patent: **06.04.2011**
(21) Application number: 06797204.2
(22) Date of filing: 31.08.2006
(51) Int. Cl.: C03C 3/087, C03C 3/095, C03C 21/00, C03C 4/00

(54) **CRYSTAL GLASS ARTICLE**
KRISTALLGLASGEGENSTAND
ARTICLE EN CRISTAL

(30) Priority: 19.05.2006 JP 2006140658
(43) Date of publication of application: 11.02.2009
(73) Proprietor: Toyo-sasaki Glass Co., Ltd., Chuo-ku Tokyo 103-8373 (JP)
(72) Inventor: SHIBATA, Noriaki, Yachiyo-shi, Chiba 276-0046 (JP); TOYODA, Hirokazu, Yachiyo-shi, Chiba 276-0046 (JP)
(74) Representative: Brown, David Leslie
(86) International application number: PCT/JP2006/317244
(87) International publication number: WO 2007/135752

(56) References cited:
- EP-A- 0 553 586
- EP-A- 0 564 802
- WO-A-95/13993
- DE-A1- 4 303 474
- JP-A- 06 009 241
- JP-A- 06 183 774
- JP-A- 09 328 330
- JP-A- 2001 080 933
- JP-A- 2002 522 346

## Description

### Technical Field

The present invention relates to crystal glass articles, such as high quality tableware, vases, ashtrays, decorative illuminations, accessories and other ornaments.

### Background Art

Crystal glass has been used for high quality tableware and craftwork because of its characteristic properties, such as high transparence and brightness, weight density, beautiful acoustics, and ease of forming and working.
For labeling an article as crystal glass, it must satisfy the requirements that its oxide composition contains, singly or in combination, 10% by weight of ZnO, BaO, PbO, or K₂O, and that it has refractive index n_{d} ≥ 1.520 and density ≥ 2.45 g/cm³ (EC specifications).

Traditional crystal glass satisfies the requirements by containing 8% to 30% by weight of lead (PbO) in silicate (SiO₂) glass. However, lead-containing crystal glass has the following disadvantages.

The first disadvantage of lead-containing crystal glass is that lead is toxic.
Glass tableware does not leach lead to toxic level in normal use. However, if lead-containing crystal glass is ground or polished in production process, it is required to eliminate the toxicity from waste water with spending on equipments and management.
In various industries, lead-free materials have been increasingly developed to reduce environmental loads. Crystal glass is in the same situation.

The second disadvantage of lead-containing crystal glass is that it is not alkali-resistant and accordingly tends to be clouded by cleanings in dishwasher with alkaline detergent.
Alternative alkali-resistant crystal glass composition has been desired.

The third disadvantage of lead-containing crystal glass is that practical use strength is low.
While many high quality crystal glass tableware have small thicknesses (rim thickness: less than 1.2 mm), it is difficult to physical strengthen portions having small thicknesses by quenching because of coming out of internal tensile stress to surface. A known approach for physical strengthening of thin articles (below-listed Patent Document 1: Japanese Unexamined Patent Application Publication No. 2-208239) has not been applied because this approach requires a high-cost acid polishing process to reduce thickness of physical strengthened thick article.
In addition, lead-containing crystal glass has low Vickers hardness (about 500 hv). Accordingly it is not scratch-resistant and good complexion is lost by bumpings among glasses.
In order to increase practical use strength of thin lead-containing crystal glass, a chemical strengthening process has been studied to replace sodium ions at the surface of glass containing K₂O and Na₂O with potassium ions within economically preferred short time (less than 90 minutes in a tunnel furnace to heat treat the glass applied with potassium aqueous solution (hereinafter referred to as aqueous solution method)). It is, however, known that lead ions in the glass obstruct replacement of alkali ions.
In a known approach disclosed in below-listed Patent Document 2 (Japanese Unexamined Patent Application Publication No.7-89748), chemical strengthening of lead-containing crystal glass by ion exchange produced an effect. However, the resulting surface compressive stress was small (150 kg/cm²) due to the lead ions obstruction, and consequently the effect in practice is limited to an increase of heat resisting temperature difference.

Chemical strengthening by aqueous solution method cannot easily produce compressive stress layer having stress of more than 1000 kg/cm² with thickness of more than 20 µm even in soda-lime glass used for containers and tableware, and the possible compressive stress layer thickness for soda lime glass is 12 µm or less. It is known that lead-containing crystal glass is more difficult to chemical strengthen than soda-lime glass.
Practical use of glass often makes scratches or flaws about 20 µm deep, which can break through the thin compressive stress layer. Thus, chemical strengthened crystal glass produced by aqueous solution method has had an inevitable disadvantage that its strength deteriorates with use. In order to get deep layer with large compressive stress on glass surface, a chemical strengthening process to heat treat glass in molten potassium salt bath for hours is known (hereinafter referred to as molten salt method). However, the practical applications of this method have been limited to watch-cover glasses and optical glasses due to the high production cost.

Lead-free crystal glass compositions containing barium (BaO) as an alternative to lead (PbO) in silicate glass are known.
Below-listed Patent Document 3 (Japanese Patent No. 2906104) has disclosed glass a composition containing 10% to 15% by weight of BaO; Patent Document 4 (Japanese Patent No. 2588468) has disclosed a glass composition containing 8% to 12% by weight of BaO.
However, barium is toxic if it is dissolved in water. Although glass tableware does not leach barium to a toxic level in normal use, barium-free glass composition facilitates production to protect environment.
Chemical strengthened crystal glass containing barium as an alternative to lead is not known.

Lead-free crystal glass compositions containing zinc (ZnO) as an alternative to lead (PbO) in silicate glass are known.
Below-listed Patent Document 5 (National publication of the Japanese version of PCT application No. 10-510793) and Patent Document 6 (National publication of the Japanese version of PCT application No. 2002-522346) have disclosed glass compositions containing 16% to 30% by weight of ZnO and 15% to 30% by weight of ZnO respectively.
However, the increase of ZnO beyond 10% by weight contributes chemical resistance little with more costs. Chemical strengthened crystal glass containing zinc as an alternative to lead is not known.

Lead-free crystal glass composition containing potassium (K₂O) as an alternative to lead (PbO) in silicate glass is known.
Below-listed Patent Document 7 (Japanese Patent No. 3236403) has disclosed glass composition containing 10% to 15% by weight of K₂O.
Chemical strengthened crystal glass containing potassium as main alternative to lead has not been known. The present inventors have found that in order to produce sufficient effect of chemical strengthening by aqueous solution method, the composition comprises less than 10% by weight of K₂O and not less than 10% by weight of Na₂O. Thus, the known composition in the prior art is not suitable for chemical strengthening by aqueous solution method.

Lead-free crystal glass compositions containing potassium (K₂O) + zinc (ZnO) as alternatives to lead (PbO) in silicate glass are known.
Below-listed Patent Document 7 (Japanese Patent No. 3236403) has disclosed glass composition containing more than 10% by weight of K₂O + ZnO.
While the crystal glass composition needs to contain very expensive niobium (Nb₂O5) in order to satisfy the required density and refractive index, the present inventors have found that niobium acts as obstructing ion to chemical strengthen glass by aqueous solution method.
Below-listed Patent Document 8 (U.S. Patent No. 4,036,623) has disclosed an optical glass composition containing 5% to 10% by weight of K₂O and 2% to 8% by weight of ZnO.
However, as the optical glass composition has high CaO contents (7% to 15% by weight), the glass properties at high temperature are not suitable to form tableware and ornaments.
The document describes that it takes 2 to 4 hours to exchange ions for chemical strengthening by molten salt method.
Below-listed Patent Document 9 (Japanese Unexamined Patent Application Publication No. 2001-80933) has disclosed glass composition containing 0.08% to 11% by weight of K₂O and 0.01% to 11% by weight of ZnO.
However, increased water content in the glass (H₂O content of 0.025% to 0.07% by weight) is indispensable for the composition, and accordingly additional process control is required with special raw materials and melting method. Commercially available European crystal glass containing 8% to 9% by weight of K₂O and 2% to 3% by weight of ZnO is known.
However, the present inventors have found that sufficient effect of chemical strengthening by aqueous solution method cannot be got with the glass. It can be explained that the glass contains less than 10% by weight of Na₂O, and on the other hand more than 5% by weight of CaO obstructing ion exchange.

Lead-free crystal glass composition containing potassium (K₂O) as main alternative to lead (PbO) in borosilicate (SiO₂-B₂O₃) glass is known.
Below-listed Patent Document 10 (National publication of the Japanese version of PCT application No. 8-506313) has disclosed glass composition containing 10% to 30% by weight of B₂O₃ and 10% to 25% by weight of K₂O.
However, borosilicate glass corrodes refractories severely, and what is worse it is difficult to form with high material cost in comparison with silicate glass.
Chemical strengthened crystal glass containing potassium as alternative to lead in borosilicate (SiO₂-B₂O₃) glass is not known.
Patent Document 1: Japanese Unexamined Patent Application Publication No. 2-208239
Patent Document 2: Japanese Unexamined Patent Application Publication No. 7-89748
Patent Document 3: Japanese Patent No. 2906104
Patent Document 4: Japanese Patent No. 2588468
Patent Document 5: National publication of the Japanese version of PCT application No. 10-510793
Patent Document 6: National publication of the Japanese version of PCT application No. 2002-522346
Patent Document 7: Japanese Patent No. 3236403
Patent Document 8: U.S. Patent No. 4,036,623
Patent Document 9: Japanese Unexamined Patent Application Publication No. 2001-80933
Patent Document 10: National publication of the Japanese version of PCT application No. 8-506313

### Disclosure of Invention

### Problems to be Solved by the Invention

The first object is to provide lead-free crystal glass compositions containing no lead nor barium to reduce environmental load, yet having forming and working properties for production of high quality tableware and craftwork, high transparence and brightness, weight density, and beautiful acoustics, which are all equivalent to those of lead-containing crystal glass, and to satisfy the labeling requirements for oxide contents in glass, refractive index and density with low cost raw materials. The second object is to provide lead-free crystal glass composition having higher alkali resistance than lead-containing crystal glass, and to realize lead-free crystal glass tableware that can be cleaned in dishwasher with alkaline detergent.
The third object is to provide lead-free crystal glass composition to replace sodium ions at glass surface with potassium ions easily for chemical strengthening thus realizing chemical strengthened thin products having high scratch resistance and strength not deteriorating with use, which have not been realized with none of lead containing crystal glass and lead-free crystal glass in prior art.

### Means for Solving the Problems

The present invention solves the above disadvantages by use of crystal glass composition having the following oxide composition substantially not containing PbO or BaO.
Specifically, the invention provides crystal glass articles having refractive index and ≥ 1.53 and density ≥ 2.6 g/cm³, made from the following glass composition (percent by weight on an oxide basis) substantially not containing lead oxide PbO or barium oxide BaO. The glass composition contains:
62% to 65% by weight of SiO₂;
2% to 3.2% by weight of Al₂O₃;
10% to 12% by weight of Na₂O;
8% by weight to less than 10.0% by weight of K₂O;
3% to 4.2% by weight of CaO;
2% to 3.2% by weight of SrO;
6% to 7.2% by weight of ZnO;
2.2% to 3% by weight of TiO₂;
0% to 0.4% by weight of Sb₂O₃; and
0% to 1.2% by weight of SnO₂ + Y₂O₃ + La₂O₃ + ZrO₂.

The invention, further more, provides the above crystal glass articles with chemical strengthened compressive stress layer of more than 1000 kg/cm² having thickness of more than 20 µm, which is formed by heat treatment for replacing sodium ions at the glass surface with potassium ions.

"Substantially not containing PbO or BaO" mentioned herein means that the composition may contain unexpected PbO or BaO from impurities (raw materials and cullet). The impurities are at most 0.1% by weight of PbO and about 0.1% by weight of BaO respectively. It is, however, preferable that raw materials and cullet be selected carefully to prevent PbO and BaO from contaminating the composition.

The present invention uses ZnO, SrO, and TiO₂ as oxides in the glass composition, instead of PbO and BaO.
TiO₂ increases refractive index and dispersion of the glass, and ZnO and SrO increase density of the glass. While these three ingredients have positive effects on refractive index, density, and acoustics of the glass, specific composition to achieve the objects is required with other oxide ingredients, of which effects are as follows.

SiO₂ content of less than 62% by weight results in poor chemical durability of glass, while SiO₂ content of more than 65% by weight results in high melting temperature and low density of glass. It has been found in the invention that suitable SiO₂ content is in the range of 62% to 65% by weight.

An Al₂O₃ content of less than 2% by weight results in poor chemical durability of glass and low ion exchange capability for chemical strengthening, while Al₂O₃ content of more than 3.2% by weight results in necessity to increase melting temperature of glass. It has been found in the invention that suitable Al₂O₃ content is in the range of 2% to 3.2% by weight.

The necessary Na₂O content to reduce melting temperature and to form crystal tableware and ornaments is not less than 10% by weight.
However, in proportion to Na₂O content, the glass corrodes pot furnace more severely, and weathering attacks glass surface more noticeably.
It has been found in the present invention that suitable Na₂O content is in the range of 10% to 12% by weight aside from the coexisting K₂O to exchange ions for chemical strengthening in a short time, reducing pot furnace corrosion and ensuring weather resistance of the glass.

In the present invention, K₂O as well as ZnO is an oxide ingredient necessary to label the resulting glass as crystal glass.
K₂O reduces melting temperature and gives gloss to the resulting glass.
However, 10% by weight or more of K₂O brings about stones in the glass and reduces the effect of chemical strengthening. It has been found that suitable K₂O content in the present invention is in the range of 8% by weight to less than 10% by weight.

While CaO reduces viscosity of glass at high temperature effectively and thus makes the glass easy to melt, it increases solidification rate at working temperature. Accordingly, the excessive content makes forming glass difficult.
It has been found in the invention that suitable CaO content is in the range of 3% to 4.2% by weight.

SrO reduces viscosity of glass at high temperature, thus makes the glass easy to melt, and increases refractive index of the glass more in comparison with other alkaline earth metal oxides. However, it also increases thermal expansion coefficient and thus excessive content reduces heat resistance of the resulting glass.
It has been found in the present invention that suitable SrO content is in the range of 2% to 3.2% by weight.

In the present invention, ZnO as well as K₂O is an oxide ingredient necessary to label the resulting glass as crystal glass.
ZnO enhances chemical durability more without increasing thermal expansion coefficient in comparison with other bivalent metal oxides in glass, and increases density. In addition, ZnO does not increase the solidification rate at working temperature. Thus, ZnO has important functions in the present invention.
However, excessive content increases liquidus temperature of glass thus making glass difficult to melt, and increases the hardness of glass thus making glass difficult to grind. It has been found in the present invention that suitable ZnO content is in the range of 6% to 7.2% by weight.

While TiO₂ increases refractive index, an excessive TiO₂ turns glass yellowish. In addition, TiO₂ increases the solidification rate at working temperature, and accordingly excessive content makes forming difficult. It has been found in the present invention that suitable TiO₂ content is in the range of 2.2% to 3% by weight.

It is known that Sb₂O₃ has refining effect in melting glass. Sb₂O₃ can be used in the range of 0% to 0.4% by weight, if necessary. If colored crystal glass is desired, known glass coloring agent, such as transition metal oxide, rare earth metal oxide, or metal colloid, can be contained in the glass in proper quantity.

SnO₂, Y₂O₃, La₂O₃, and ZrO₂ increase density and refractive index of glass.
These oxides can be contained singly or in combination in total content of 1.2% by weight or less without difficulty in melting. In the present invention, suitable SnO₂ + Y₂O₃ + La₂O₃ + ZrO₂ content is in the range of 0% to 1.2% by weight.

The present invention provides glass containing 14% by weight or more of ZnO + K₂O in total, with refractive index nd ≥ 1.53 and density ≥ 2.6 g/cm³ ,thus satisfying labeling requirements for crystal glass.
These physical properties lead to crystal glass having brightness, weight density, and beautiful acoustics.
High transparence can be achieved by using raw materials containing less impurities such as iron.

For pot furnace melting of hand blowing glass, high temperature viscosity log η = 2 should be given below 1430°C by selecting glass composition, thus glass can get rid of bubbles and seeds.
In addition, to get working temperature range suitable for both of hand blowing and machine forming of glass, cooling time derived from viscosity dependence on temperature should be in the range of 110 to 115 seconds by selecting glass composition.
While it was commonly known that glass compositions satisfying these requirements tend to be less alkali resistant and less weather resistant, the present invention discloses composition having excellent melting and forming properties plus alkali resistance with selected glass- constituting oxides and their proportions.
Thus, crystal glass tableware with the invented composition can be cleaned in dishwasher with alkaline detergent.

Provided that chemical strengthened compressive stress layer having stress of larger than 1000 kg/cm² with thickness of greater than 20 µm is obtained through heat treating glass to replace sodium ions at the surface of glass with potassium ions, scratch resistance can increases enough and the strength deteriorates less with use. In the present invention, it has been found that by selecting appropriate oxide composition for glass, chemical strengthened compressive stress layer with the required stress and thickness can be obtained even in common chemical strengthening process to heat treat the glass below softening temperature in a tunnel furnace after applying potassium aqueous solution onto the glass surface.
Chemical strengthening can be applied to the entire surface of the article, or to the part of surface (for example, only to the external surface of a tableware glass).

Glass of the present invention can contain additives, such as coloring agent. An article can be made either by hand blowing or by machine forming.

### Advantageous effects of the invention

As crystal glass article of the present invention does not substantially contain PbO or BaO in glass composition, it is free from danger reducing environmental load, still having high transparence and brightness, weight density, beautiful acoustics, and ease of forming and working, which are equal to those of traditional crystal glass articles. In addition, crystal glass article of the invention can be chemical strengthened by aqueous solution method with ease, and the resulting chemical strengthened compressive stress layer of larger than 1000 kg/cm² with thickness of greater than 20 µm makes glass scratch-resistant and the strength deteriorates less with use. Furthermore, crystal glass article of the invention is alkali-resistant, and consequently high transparence and brightness of the glass can be preserved through repeating washings with detergent.

### Brief Description of the Drawings

[Fig. 1] Fig. 1 is a graph showing weight loss percentage through alkaline detergent immersion test for Examples and Comparative Examples.
[Fig. 2] Fig. 2 is a diagram showing Vickers hardness of Examples and Comparative Examples.
[Fig. 3] Fig. 3 is a diagram showing crack initiation probability through indentation crack resistance test of Examples and Comparative Examples.
[Fig. 4] Fig. 4 is a diagram showing relationship between density and reverberation time of glass.
[Fig. 5] Fig. 5 shows how crack resistance is measured by micro Vickers hardness tester.

### Explanation of Numerals

1: glass sample
2: indenter
3: residual indentation
4: crack

### Examples

Table 1 shows glass compositions expressed in weight percent of oxide for Examples of the present invention and Comparative Examples.
Raw materials were put in a platinum crucible and melted at temperature of 1400 to 1450°C for 2 to 3 hours in an electric furnace. The molten glass was poured into a stainless steel mold and was cooled to room temperature from annealing temperature in an electric furnace to prepare glass samples for respective measurements.

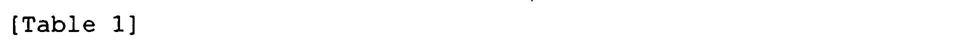

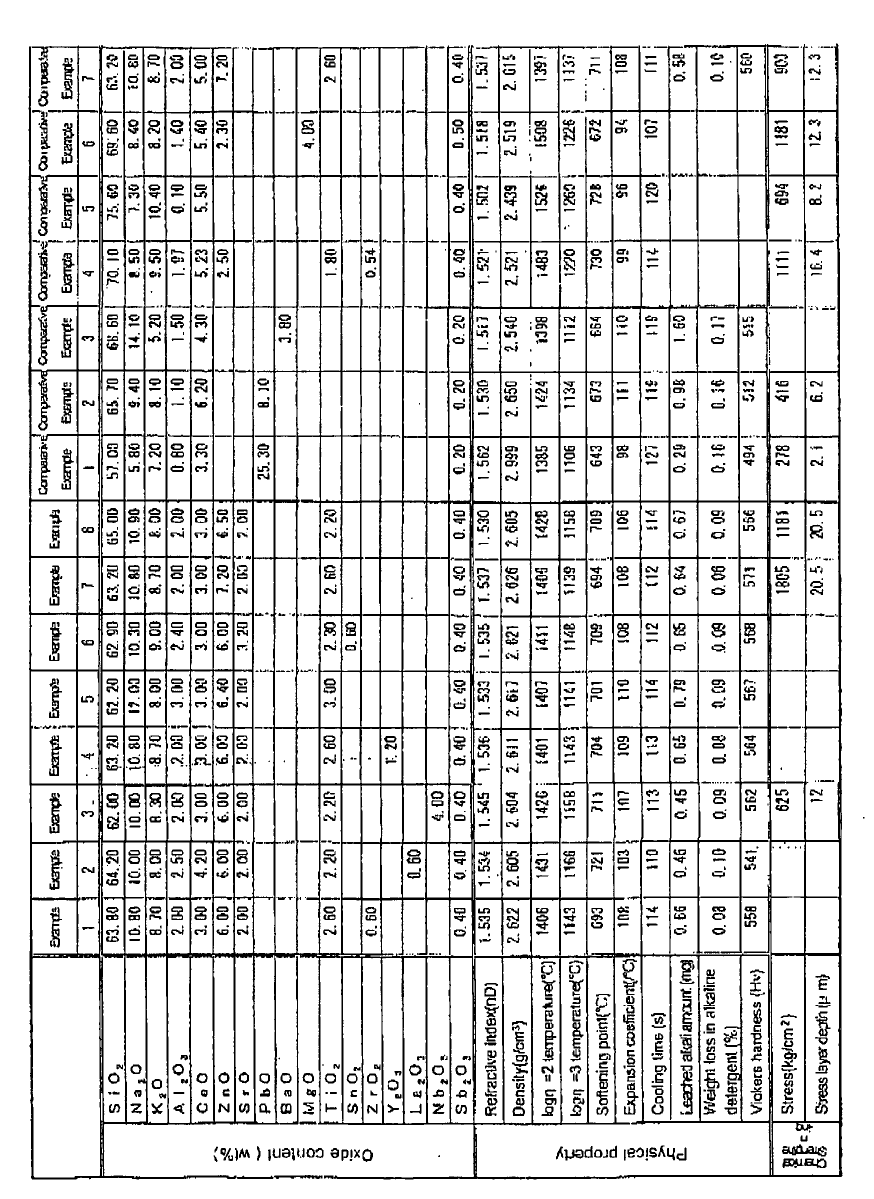

High temperature viscosity (LOG η = 2 (°C) and LOG η = 3 (°C)) of samples of the Examples and the Comparative Examples was measured for the evaluation of melting property. Preferred LOG η = 2 (°C) for melting in common pot furnace is 1.430°C or less in order to refine glass. As shown in Table 1, it has been confirmed that each glass of the Examples has melting property almost equivalent to that of Comparative Examples 1 and 2 (lead crystal glass for melting in common pot furnace). Commercially available lead-free crystal glasses (Comparative Examples 4, 5, and 6) have such a high LOG η = 2 (°C) value that they are unsuitable for melting in common pot furnace.

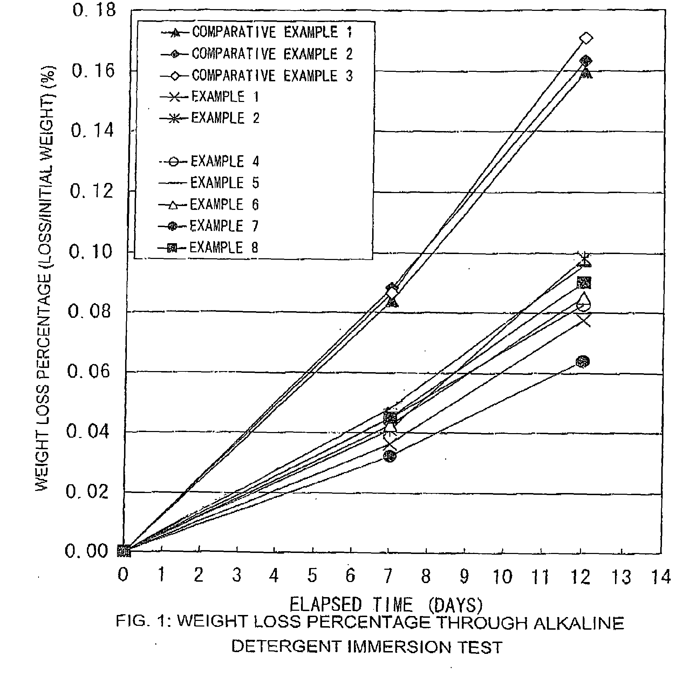

For evaluation of alkali resistance, glass specimens of the Examples and the Comparative Examples having dimensions of 40 mm by 40 mm by 5 mm were immersed in 100 mL of 0.2% alkaline detergent solution (Adeka Washmate EP) (pH = 10.5) at 65°C for 24 hours. The specimens were then taken out, rinsed with water and dried to measure weight loss per day as a cycle. A cycle of procedures was repented for 12 days. The results are shown in Fig. 1 and Table 2. weight loss (%) in alkaline detergent after 12 cycles is shown in Table 1. It was proved that the Examples have higher alkali resistance reducing weight loss (%) in alkaline detergent to about 1/2 to 2/3 of that of Comparative Examples 1. and 2 (lead-containing crystal glass).
Also, while the immersion test made specimen surface of Comparative Examples 1. and 2 cloudy, the Examples remained unchanged. Thus, it was confirmed that the Example glass can be cleaned by dishwasher with alkaline detergent without risk of surface clouding.

**[Table 2]**

| Weight loss (%) In alkaline detergent through immersion test | | | | | | | | | | |
|---|---|---|---|---|---|---|---|---|---|---|
| Elapsed time | Comparative Example 1 | Comparative Example 2 | Comparative Example 3 | Example 1 | Example 2 | Example 4 | Example 5 | Example 6 | Example 7 | Example 8 |
| 7 days | 0.8% | 0.09% | 0.09% | 0.04% | 0.04% | 0.05% | 0.05% | 0.04% | 0.03% | 0.05% |
| 12 days | 0.16% | 0.16% | 0.17% | 0.08% | 0.10% | 0.08% | 0.09% | 0.09% | 0.06% | 0.09% |

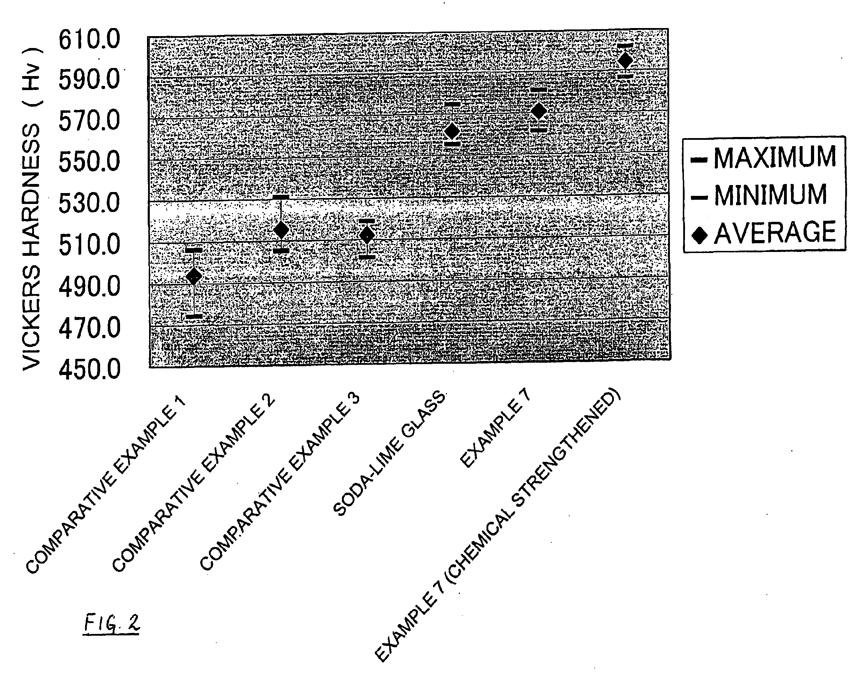

For evaluating hardness of Examples and Comparative Examples, cut and ground glass specimen of 40 mm square and 5 mm in thickness was used for the Vickers hardness measurement by micro Vickers hardness tester.
As shown in Fig. 2, while Vickers hardness of conventional lead-containing crystal glasses (Comparative Examples 1 and 2) is 490 to 510 Hv, Vickers hardness of Example 7 is 570 Hv, almost equivalent to general soda-lime glass, which can be increased further by about 5% with chemical strengthening. This clearly shows that glass of the Example is more scratch-resistant than lead-containing crystal glass.

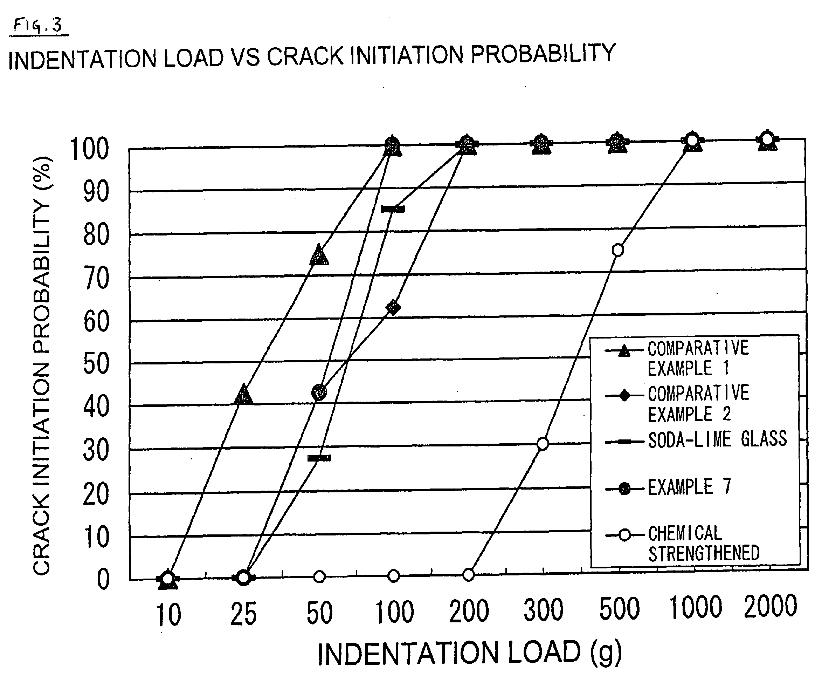

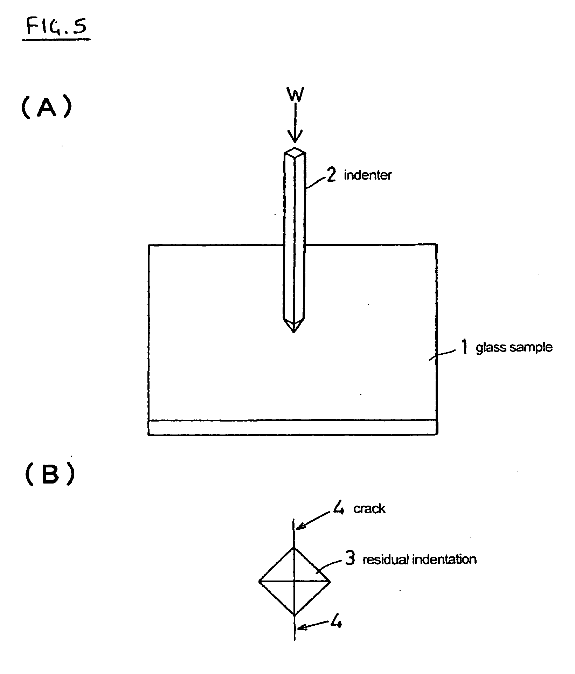

For evaluating brittleness, cut and ground glass specimen of 40 mm square and 5 mm in thickness was used for crack resistance measurement by micro Vickers hardness tester.
As shown in Fig.5(A), the ground glass specimen(1) is subject to indenter(2) of micro Vickers hardness tester with 10 different applied loads (10-2000g) for 15 seconds, and the average number of cracks initiated is counted 30 seconds after removing load.
Crack initiation load is defined as load W when crack initiations(4) at any 2 corners of residual indentation(3) with 4 corners are observed (50% crack initiation probability) as shown in Fig.5(B).
The measurement was done at 20°C in air, using a micro Vickers hardness tester manufactured by Akashi.
As shown in Fig. 3 and Table 3, crack initiation load of Example is about 50 gf, not making great difference from that of ordinary lead-containing crystal glasses (Comparative Examples 1 and 2) or ordinary soda-lime glass. However, it can be increased by about 8 times to 400 gf by chemical strengthening.
It is known that glass breakage originates from micro crack at the surface in practical use. Having higher crack initiation load, glass is less brittle. As for "Crack Initiation Probability" shown in Fig. 3 and Table 3, 0% means for zero cracks, 25% for one crack, 50% for 2 cracks, 75% for 3 cracks, and 100% for 4 cracks.

**[Table 3]**

| Indentation load vs crack initiation probability | | | | | |
|---|---|---|---|---|---|
| Indentation load | Comparative Example 1 | Comparative Example 2 | Soda-lime glass | Example 7 | Chemical strengthened |
| 10g | 0% | 0% | 0% | 0% | 0% |
| 25g | 42.5% | 0% | 0% | 0% | 0% |
| 50g | 75% | 42.5% | 27.5% | 42.5% | 0% |
| 100g | 100% | 62.5% | 85% | 100% | 0% |
| 200g | 100% | 100% | 100% | 100% | 0% |
| 300g | 100% | 100% | 100% | 100% | 30% |
| 500g | 100% | 100% | 100% | 100% | 75% |
| 1000g | 100% | 100% | 100% | 100% | 100% |

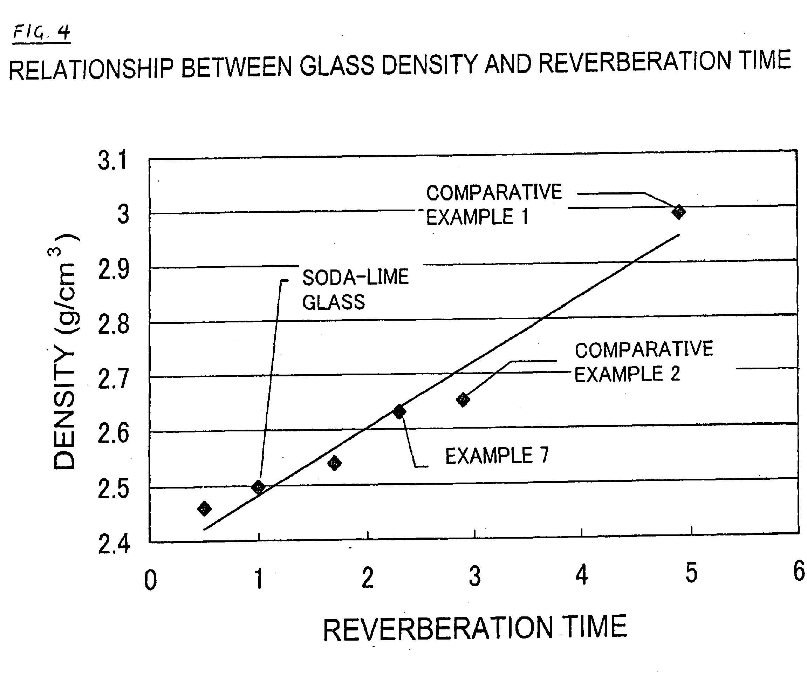

For evaluating acoustic properties of Examples and Comparative Example, glass was cut and polished to prepare test piece(100 mm by 5 mm by 3 mm). Measuring resonance frequency in the flexural mode of vibration of the test piece in accordance with JIS K 7244-3, loss factor and Young's modulus were calculated. Sound pitch and reverberation time were obtained from resonance frequency and loss factor of the test piece respectively, and thus the timbre was evaluated.
Beautiful acoustics of crystal glass means echoes lasting for a long time after an impulse, that is, long reverberation time.
Therefore, reverberation time of various types of glass was measured.
As a result, it was confirmed that density of glass correlates with reverberation time, as shown in Fig. 4.
The reverberation time used herein is expressed as a relative value to that of soda-lime glass supposing 1. It was found in the present invention that preferred reverberation time for beautiful acoustics is at least twice as long as that of soda-lime glass and that density of 2.6 g/cm³ at the lowest is required.

For evaluating the effect of chemical strengthening by aqueous solution method, specimen's surface of Examples and Comparative Examples was wetted with potassium salt aqueous solution and then subjected to ion exchange at temperature of 400 to 460°C for 90 minutes.
As shown in Table 1, while the Examples 7 and 8 were given chemical strengthened compressive stress layer having stress of larger than 1000 kg/cm² and thickness (stress depth) of greater than 20 µm, no Comparative Examples were given stress layer satisfied these required values.

## Claims

1. Crystal glass article formed, of which glass having refractive index n_{d} ≥ 1.53 and density ≥ 2.6 g/cm³, with a glass composition substantially not containing lead oxide PbO or barium oxide BaO, consisting essentially of in weight percent:
62% to 65% by weight of SiO₂;
2% to 3.2% by weight of Al₂O₃;
10% to 12% by weight of Na₂O;
8% by weight to less than 10.0% by weight of K₂O;
3% to 4.2% by weight of CaO;
2% to 3.2% by weight of SrO;
6% to 7.2% by weight of ZnO;
2.2% to 3% by weight of TiO₂;
0% to 0.4% by weight of Sb₂O₃; and
0% to 1.2% by weight of SnO₂ + Y₂O₃ + La₂O₃ + ZrO₂.

2. The crystal glass article according to Claim 1,
wherein the glass is given chemically strengthened compressive stress layer having stress of larger than 1000 kg/cm² and thickness of greater than 20 µm by heat treatment for replacing sodium ions at the glass surface with potassium ions.

## Patentansprüche

1. Geformter Kristallglasgegenstand, dessen Glas einen Brechungsindex n_{d} ≥ 1,53 und eine Dichte ≥ 2,6 g/cm³ hat, und deren Glas-Zusammensetzung im Wesentlichen kein Bleioxid PbO oder Bariumoxid BaO enthält, und im Wesentlichen, ausgedrückt in Gewichtsprozent, besteht aus:
62 bis 65 Gewichtsprozent SiO₂;
2 bis 3,2 Gewichtsprozent Al₂O₃;
10 bis 12 Gewichtsprozent Na₂O;
8 Gewichtsprozent bis weniger als 10,0 Gewichtsprozent K₂O;
3 bis 4,2 Gewichtsprozent CaO;
2 bis 3,2 Gewichtsprozent SrO;
6 bis 7,2 Gewichtsprozent ZnO;
2,2 bis 3 Gewichtsprozent TiO₂;
0 bis 0,4 Gewichtsprozent Sb₂O₃; und
0 bis 1,2 Gewichtsprozent SnO₂ + Y₂O₃ + La₂O₃ + ZrO₂.

2. Kristallglasgegenstand nach Anspruch 1, wobei dem Glas durch Wärmebehandlung eine chemisch verstärkte Druckbelastungsschicht mit einer Belastung von mehr als 1000 kg/cm² und einer Dicke von mehr als 20 µm verliehen wird, so dass die Natriumionen an der Glasoberfläche durch Kaliumionen ersetzt werden.

## Revendications

1. Article en cristal formé, le cristal ayant un indice de réfraction n_{d} ≥ 1,53 et une densité ≥ 2,6 g/cm³, avec une composition du cristal ne contenant essentiellement pas d'oxyde de plomb PbO ou d'oxyde de barium BaO, constitué, en pourcent poids, essentiellement de
62 % à 65 % en poids SiO₂;
2 % à 3,2 % en poids Al₂O₃;
10 % à 12 % en poids Na₂O;
8 % en poids à moins de 10,0 % en poids K₂O;
3 % à 4,2 % en poids CaO;
2 % à 3,2 % en poids SrO;
6 % à 7,2 % en poids ZnO;
2,2 % à 3 % en poids TiO₂;
0 % à 0,4 % en poids Sb₂O₃; et
0 % à 1,2 % en poids SnO₂ + Y₂O₃ + La₂O₃ + ZrO₂.

2. Article en cristal formé selon la revendication 1 dans lequel au cristal est ajouté une couche de contrainte compressive renforcée chimiquement ayant une contrainte supérieure à 1000 kg/cm² et une épaisseur supérieure à 20 µm par traitement thermique pour remplacer des ions sodium par des ions potassium à la surface du cristal.
